# DEMANDE DE BREVET EUROPEEN

(11) **EP 3 967 420 A1**
(43) Date de publication de la demande: **16.03.2022**
(21) Numéro de dépôt: 21186768.4
(22) Date de dépôt: 20.07.2021
(51) Int. Cl.: B21D 53/02, F25J 1/00, F28F 3/02, F28F 27/00

(54) **DISPOSITIF DE MESURE DE TEMPÉRATURES DANS UN ÉCHANGEUR DE CHALEUR**

(30) Priorité: 11.09.2020 FR 2009231
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: BELMEKKI, Younes, 78350 Jouy en Josas (FR); DELEGUE, Ahlem, 78350 Jouy en Josas (FR); BERHAUT, Paul, 78350 Jouy en Josas (FR); WAGNER, Marc, 78350 Jouy en Josas (FR); HAIK, Natacha, 94500 Champigny sur Marne (FR); AMANT, Ludovic, 94400 Vitry sur Seine (FR)
(74) Mandataire: Air Liquide

(57) **Abrégé**

L'invention concerne un échangeur de chaleur du type à plaques et ailettes brasées comprenant un empilement de plaques (2) agencées parallèlement entre elles et à une direction longitudinale (z) de façon à définir entre lesdites plaques (2) une pluralité de passages (3) adaptés pour l'écoulement d'au moins un premier fluide suivant la direction longitudinale (z), au moins une structure d'échange (8) de forme ondulée étant agencée entre deux plaques (2) successives et comprenant des sommets d'onde (121) et des bases d'onde (122) reliés alternativement par une succession d'ailettes (123), lesdites ailettes (123) se succédant suivant une direction latérale (x) qui est orthogonale à la direction longitudinale (z) et qui définit une direction d'ondulation de la structure d'échange (8), et les sommets et bases d'ondes (121, 122) étant disposés contre les plaques (2) et présentant une épaisseur (e) mesurée parallèlement à une direction d'empilement (y) qui est perpendiculaire à la direction longitudinale (z) et à la direction latérale (x), la structure d'échange (8) ayant une hauteur totale (H) mesurée parallèlement à une direction d'empilement (y). Selon l'invention, au moins une rainure (12) est ménagée à travers la structure d'échange (8) dans une direction perpendiculaire à la direction longitudinale (z), une sonde de température (14) étant agencée dans la rainure (12), ladite rainure (12) étant ménagée depuis des sommets d'onde (121) sur une hauteur prédéterminée (h) mesurée suivant la direction d'empilement (y) qui est supérieure à l'épaisseur (e) des sommets d'onde (121).

## Description

La présente invention est relative à un échangeur de chaleur du type à plaques et ailettes brasées comportant au moins une sonde de température permettant de réaliser des mesures de températures d'au moins un fluide circulant dans l'échangeur.

La présente invention trouve notamment application dans le domaine de la séparation de gaz par cryogénie, en particulier de la séparation d'air par cryogénie (connue sous l'acronyme anglais « ASU » pour unité de séparation d'air) exploitée pour la production d'oxygène gazeux sous pression. En particulier, la présente invention peut s'appliquer à la fabrication d'un échangeur de chaleur qui vaporise un débit liquide, par exemple de l'oxygène liquide, de l'azote et/ou de l'argon par échange de chaleur avec un débit gazeux, par exemple l'air ou l'azote. La présente invention peut également s'appliquer à un échangeur de chaleur qui vaporise au moins un débit de mélange liquide-gaz, en particulier un débit de mélange à plusieurs constituants, par exemple un mélange d'hydrocarbures, par échange de chaleur avec au moins un autre fluide, par exemple du gaz naturel.

Une technologie couramment utilisée pour les échangeurs de chaleur est celle des échangeurs à plaques brasées, qui permettent d'obtenir des organes très compacts offrant une grande surface d'échange et de faibles pertes de charge. Ces échangeurs sont formés d'un ensemble de plaques parallèles entre lesquelles sont généralement insérées des éléments intercalaires, tels des structures ondulées ou ondes, qui forment des structures d'échange thermique à ailettes. Les plaques empilées forment entre elles un empilement de passages plats pour différents fluides à mettre en relation d'échange thermique.

Lors de la fabrication de l'échangeur, les plaques, les éléments intercalaires à ailettes et les autres éléments constitutifs de l'échangeur sont plaqués les uns contre les autres et sont ensuite liés entre eux par brasage dans un four sous vide à des températures qui peuvent être comprises entre 550 et 900 °C.

Du fait de leur compacité et de leur construction monolithique, il est très difficile d'effectuer des mesures locales de températures au sein de ces échangeurs brasés. Ainsi, dans l'immense majorité des procédés dans lesquels ils sont implantés, l'opérateur n'a accès qu'à la puissance thermique totale échangée entre fluides, grâce à un bilan énergétique réalisé entre l'entrée et la sortie de chaque fluide.

Cela complique fortement la caractérisation de ces échangeurs et ne permet pas, par exemple, de mesurer isolément le coefficient d'échange thermique de chacun des passages.

En utilisation, l'absence de données locales limite les possibilités de contrôle du procédé. En particulier, certains phénomènes physiques particuliers qui peuvent avoir lieu au sein de l'échangeur, tels que des changements de phase ou des réactions chimiques, se traduisent par une variation locale de la température, qui dépend aussi de la position considérée dans l'échangeur.

La mesure locale de températures permettrait de détecter in situ de mauvaises conditions de fonctionnement des échangeurs : mal-distribution des fluides, diminution de la performance de certaines zones de l'échangeur due par exemple à des phénomènes de bouchage ou de distillation locale. Il est aussi utile de bénéficier de mesures locales de températures ou de flux thermiques pour surveiller l'évolution des performances des échangeurs à plaques et ailettes au cours de leur durée de vie.

Face à ces besoins, on constate que les solutions de mesure de températures existantes ne donnent pas entière satisfaction, notamment du fait de la complexité des pièces de maintien utilisées, ou de leur mise en œuvre.

Des méthodes de mesure de températures « in situ » existent, mais elles sont souvent trop intrusives, car elles modifient de façon excessive les écoulements des fluides au sein des passages d'échange. Et parce qu'elles ne sont pas prévues dès la construction de l'échangeur, leur mise en œuvre est relativement complexe, couteuse et peu robuste. D'autres méthodes ne permettent que des mesures de températures indirectes dont la précision peut s'avérer insuffisantes pour certains procédés.

La présente invention a notamment pour but de résoudre tout ou partie des problèmes mentionnés ci-avant, en proposant un échangeur de chaleur à plaques brasées permettant de réaliser des mesures de températures directes et locales des fluides circulant au sein de l'échangeur et ce de façon plus précise, à la fois en termes de valeur mesurée et de position dans l'échangeur, en minimisant les perturbations du fonctionnement de l'échangeur et de l'écoulement des fluides, et sans augmenter l'encombrement de l'échangeur.

Dans ce but, l'invention a pour objet un échangeur de chaleur du type à plaques et ailettes brasées comprenant un empilement de plaques agencées parallèlement entre elles et à une direction longitudinale de façon à définir entre lesdites plaques une pluralité de passages adaptés pour l'écoulement d'au moins un premier fluide suivant la direction longitudinale, au moins une structure d'échange de forme ondulée étant agencée entre deux plaques successives et comprenant des sommets d'onde et des bases d'onde reliés alternativement par une succession d'ailettes, lesdites ailettes se succédant suivant une direction latérale qui est orthogonale à la direction longitudinale et qui définit une direction d'ondulation de la structure d'échange, et les sommets et bases d'ondes étant disposés contre les plaques et présentant une épaisseur mesurée parallèlement à une direction d'empilement qui est perpendiculaire à la direction longitudinale et à la direction latérale, la structure d'échange ayant une hauteur totale mesurée parallèlement à une direction d'empilement, caractérisé en ce qu'au moins une rainure est ménagée à travers la structure d'échange dans une direction perpendiculaire à la direction longitudinale, une sonde de température étant agencée dans la rainure, ladite rainure étant ménagée depuis des sommets d'onde sur une hauteur prédéterminée mesurée suivant la direction d'empilement qui est supérieure à l'épaisseur des sommets d'onde.

Selon le cas, l'échangeur selon l'invention peut comprendre l'une ou plusieurs des caractéristiques énoncées ci-dessous.

La sonde de température est choisie parmi une sonde à résistance, notamment à résistance de platine, une sonde de température à thermocouple, une sonde de température à thermistance. La sonde de température est configurée pour mesurer la température en un endroit souhaité d'au moins un premier fluide s'écoulant entre deux plaques successives, et ce de sorte que la partie thermosensible est en contact direct avec ledit au moins un premier fluide.

La structure d'échange présente une hauteur totale mesurée parallèlement à une direction d'empilement, la hauteur prédéterminée de la rainure étant égale à au moins 25% de la hauteur totale et/ou au plus 75% de la hauteur totale, de préférence entre 25 et 75% de la hauteur totale. La rainure présente une largeur mesurée parallèlement à la direction longitudinale, comprise entre 0,6 et 5 mm, de préférence entre 1 et 4 mm.

La structure d'échange présente une longueur totale mesurée suivant la direction latérale et comprend au moins une rainure s'étendant, suivant la direction latérale, sur une longueur prédéterminée comprise entre 25 et 75% de la longueur totale de la structure d'échange. L'échangeur comprend au moins une rainure résultant d'une perforation de la structure d'échange réalisée par usinage, électroérosion ou découpage, en particulier par découpage au plasma, au laser ou au jet d'eau.

La structure d'échange comprend plusieurs tapis d'onde juxtaposés le long de la direction longitudinale, au moins une rainure étant définie par un jeu formé entre deux tapis d'onde adjacents.

La structure d'échange est du type onde à décalage partiel comprenant plusieurs ondulations comprenant chacune une série de sommets d'onde et de bases d'onde reliés alternativement par une succession d'ailettes, au moins une partie desdites ondulations présentant un décalage prédéterminé suivant la direction latérale par rapport à une autre ondulation adjacente, lesdites ondulations ayant des longueurs dites de serration mesurées suivant la direction longitudinale, la largeur de la rainure, mesurée parallèlement à la direction longitudinale étant comprise entre 15 et 90%, de préférence entre 20 et 50% de la longueur de serration.

Les passages sont délimités par des barres de fermetures disposées entre les plaques, au moins une barre de fermeture s'étendant parallèlement à la direction longitudinale et comprenant au moins un évidement, ledit évidement communiquant d'une part avec la rainure et d'autre part avec l'extérieur de l'empilement.

La sonde de température fait saillie à l'extérieur de l'empilement par l'évidement puis par un raccord fixé, de préférence soudé, sur la barre de fermeture dans le prolongement de l'évidement, le raccord étant configuré pour assurer une étanchéité fluidique entre l'évidement et l'extérieur de l'empilement.

La rainure s'étend entre une première extrémité configurée pour l'insertion de la sonde de température et une deuxième extrémité agencée au sein du passage et recevant l'extrémité de la sonde, la rainure présentant, au niveau de l'une et/ou l'autres desdites première et deuxième extrémités, une augmentation de sa largeur et/ou de sa hauteur de façon à former une première cavité et/ou une deuxième cavité auxdites première et/ou deuxième extrémités.

Ledit au moins un passage est délimité entre deux barres de fermeture opposées s'étendant parallèlement à la direction longitudinale, la structure d'échange comprenant au moins une paire de rainures qui s'étendent depuis chaque barre de fermeture en regard l'une de l'autre, éventuellement les rainures de la paire se rejoignent de façon à former une même rainure traversant tout le passage.

La structure d'échange comprend une pluralité de rainures positionnées le long de la direction longitudinale à des intervalles prédéterminés.

Les intervalles prédéterminés varient le long d'au moins une partie de la structure d'échange, de préférence les intervalles augmentent suivant la direction longitudinale.

La structure d'échange est divisée, suivant la direction longitudinale, en au moins deux portions, celle des deux portions située en aval de l'autre ayant des intervalles entre les rainures supérieurs aux intervalles de l'autre des deux portions

L'invention va maintenant être mieux comprise grâce à la description qui va suivre, donnée à titre d'exemple non limitatif et faite en référence aux figures ci-annexées parmi lesquelles :
Fig. 1 est une vue schématique tridimensionnelle d'un échangeur à plaques brasées selon un mode de réalisation de l'invention,
Fig. 2 est une vue schématique en coupe longitudinale d'un passage d'un échangeur selon un mode de réalisation de l'invention,
Fig. 3 est une vue schématique en coupe longitudinale d'un passage d'un échangeur selon un mode de réalisation de l'invention.
Fig. 4 est une vue schématique tridimensionnelle d'une structure d'échange selon un mode de réalisation de l'invention.
Fig. 5 montre schématiquement différentes vues d'une rainure selon des modes de réalisation de l'invention.

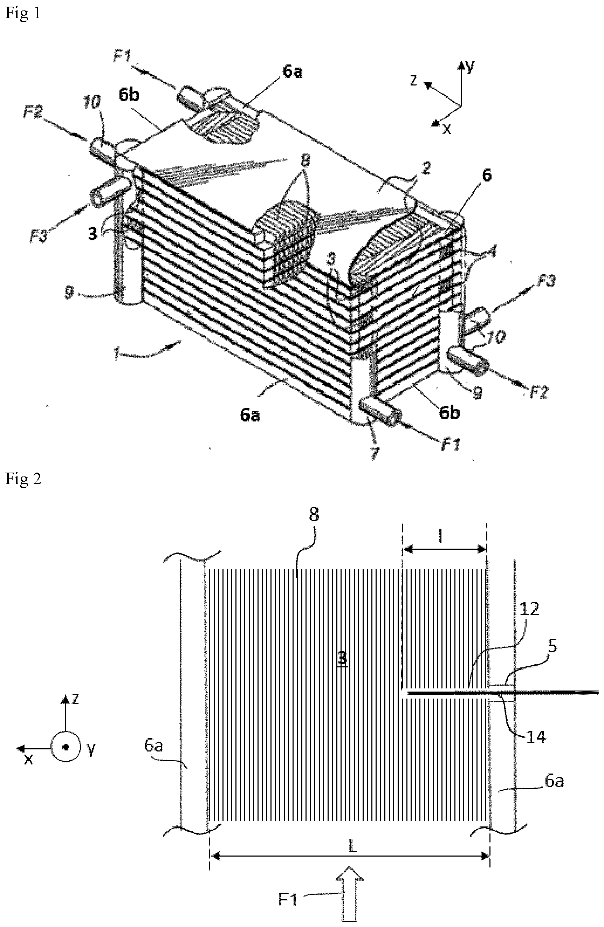

La figure 1 représente un échangeur de chaleur 1 du type à plaques et ailettes brasées comprenant un empilement de plaques 2 qui s'étendent suivant deux dimensions, longueur et largeur, respectivement suivant la direction longitudinale z et la direction latérale x. Les plaques 2 sont disposées l'une au-dessus de l'autre, parallèlement entre elles, et avec espacement. Elles forment ainsi entre elles plusieurs ensembles de passages 3, certains passages étant prévus pour l'écoulement d'un premier fluide F1, et d'autres passages prévus pour l'écoulement d'au moins un autre fluide F2, F3 à mettre en relation d'échange de chaleur indirect avec F1 via les plaques 2. La direction latérale x est perpendiculaire à la direction longitudinale z et parallèle aux plaques 2. Les fluides s'écoulent de préférence dans la longueur de l'échangeur parallèlement à la direction longitudinale z, la longueur étant grande devant la largeur de l'échangeur.

De préférence, chaque passage 3 a une forme parallélépipédique et plate. L'écart entre deux plaques 2 successives, correspondant à la hauteur d'un passage, mesurée suivant la direction d'empilement y des plaques 2, est petit devant la longueur et la largeur de chaque plaque successive. La direction d'empilement y est orthogonale aux plaques.

Les passages 3 sont délimités par des barres de fermeture 6a, 6b disposées entre les plaques 2, en périphérie des passages 3. Ces barres 6a, 6b assurent l'espacement entre les plaques 2 et définissent les bords périphériques des passages. Au moins une barre de fermeture 6a s'étend suivant la direction longitudinale z, c'est-à-dire que la barre 6a est parallèle à la direction z, de préférence le passage 3 est délimité entre une paire de barres 6a parallèles, et au moins une barre de fermeture 6b s'étend suivant la direction latérale x, c'est-à-dire que la barre 6b est parallèle à la direction x, de préférence le passage 3 est délimité entre une paire de barres 6b parallèles à la direction latérale x.

Selon la localisation des zones d'introduction et d'évacuation de fluide de l'échangeur, les barres de fermeture 6a, 6b peuvent n'obturent pas complètement les passages mais laissent des ouvertures libres pour l'entrée ou la sortie des fluides correspondants. L'échangeur 1 comprend des collecteurs de forme semi-tubulaire 7, 9 munis d'entrées et de sorties 10 pour l'introduction des fluides dans l'échangeur 1 et l'évacuation des fluides hors de l'échangeur 1. Ces collecteurs présentent des ouvertures moins larges que les passages. Des zones de distribution agencées en aval des collecteurs d'entrée et en amont des collecteurs de sortie servent à canaliser de façon homogène les fluides vers ou depuis toute la largeur des passages.

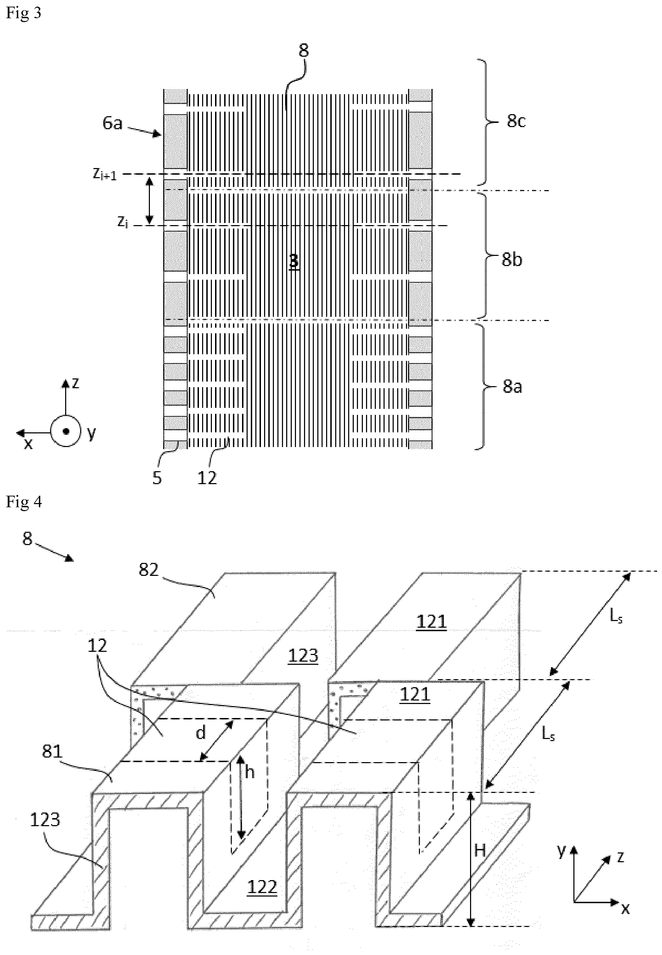

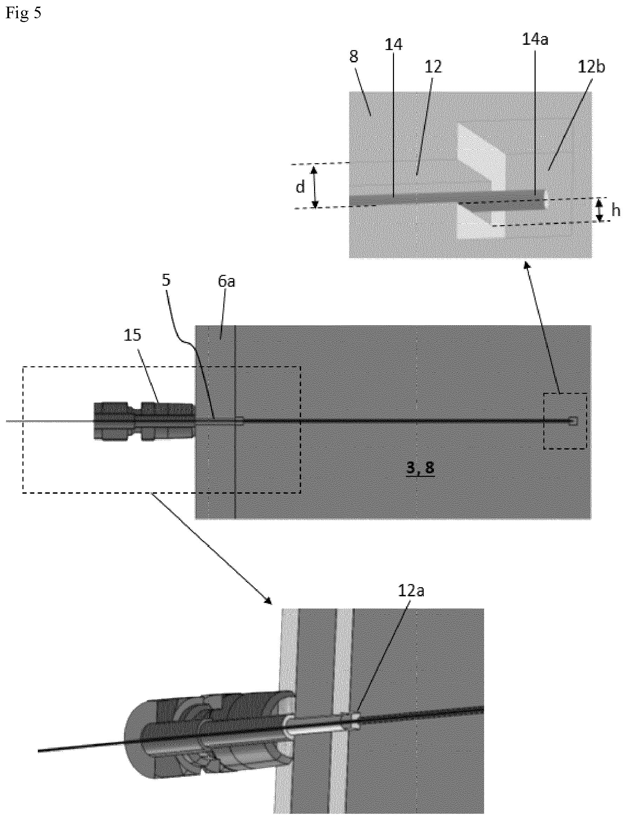

Au moins une partie des passages 3 comprend au moins une structure d'échange thermique 8 à ailettes qui s'étend suivant la largeur et la longueur des passages de l'échangeur, parallèlement aux plaques 2. La structure d'échange 8, également appelées éléments intercalaires, comprennent au moins une onde d'échange thermique sous forme de tôle ondulée. Dans ce cas, on appelle « ailettes » 123 les jambes d'onde qui relient les sommets 121 et les bases 122 successifs de l'onde 8. Des exemples de structure d'échange 8 ondulées sont montrées sur les figures 4 et 5. Les ailettes 123 s'étendent parallèlement à la direction longitudinale z et se succèdent suivant la direction latérale x qui définit une direction générale d'ondulation de la structure d'échange 8. Les jambes d'onde forment des surfaces secondaires d'échange thermique, qui s'étendent depuis les surfaces primaires d'échange thermiques formées par les plaques 2 de l'échangeur. Les sommets d'onde et les bases d'onde ont une épaisseur e mesurée parallèlement à la direction d'empilement y. La structure d'échange 8 présente une hauteur totale H, mesurée parallèlement à la direction d'empilement y, qui est de préférence égale ou très légèrement inférieure à la hauteur du passage 3 dans lequel elle est insérée.

Notons que sur la figure 1, on a représenté des ondes d'échange 8 droites agencées dans les passages de l'échangeurs. Bien entendu, tout type d'ondes est envisageable, notamment des ondes droites non perforées, des ondes à arête de hareng pour « herringbone » en anglais, également appelées ondes ondulées pour « wavy » en anglais, ainsi que des ondes à décalage partiel telles qu'illustrées sur l'exemple de la figure 5.

De préférence, lors de la fabrication de l'échangeur 1, on approvisionne un ensemble de plaques 2 que l'on empile parallèlement entre elles et à la direction longitudinale z. Les plaques 2 sont espacées les unes des autres par les barres de fermetures 6a, 6b. Après assemblage des autres éléments constitutifs de l'échangeurs, notamment les ondes d'échanges, les ondes de distribution..., l'empilement est brasé afin de solidariser les éléments de l'échangeurs les unes ou autres. De préférence, les plaques et tout ou partie des autres éléments constitutifs de l'échangeur sont en aluminium ou en alliage d'aluminium.

Un métal d'apport, appelé brasure ou agent de brasage, ayant une température de fusion prédéterminée, est agencé entre les éléments de l'échangeur. De préférence, la température de fusion prédéterminée est comprise entre 550 et 900 °C, de préférence encore comprise entre 550 et 650 °C. L'agent de brasage 30 est de préférence de l'aluminium ou un alliage d'aluminium.

L'assemblage est obtenu par fusion et diffusion de l'agent de brasage au sein des pièces à braser, sans fusion de celles-ci. Les plaques, les éléments intercalaires à ailettes et les autres éléments constitutifs de l'échangeur sont plaqués les uns contre les autres par un dispositif de compression appliquant une force de compression aux plaques 2, comprise typiquement entre 20 000 à 40 000 N/m². L'empilement est introduit dans un four sous vide et brasé à des températures qui peuvent être comprises entre 550 et 900 °C, de préférence comprises entre 550 et 650 °C.

Comme on le voit sur la figure 2, au moins une rainure 12 est ménagée à travers la structure d'échange 8 dans une direction parallèle à la direction latérale x. La rainure 12 est configurée pour recevoir au moins une sonde de température 14. Notons que la sonde de température peut être insérée en tout ou partie dans la rainure 12.

Selon l'invention, la rainure 12 s'étend, suivant la direction d'empilement y, sur une hauteur prédéterminée h depuis des sommets d'onde 121 de la structure d'échange 8, la hauteur prédéterminée h étant supérieure à l'épaisseur e des sommets d'onde 121.

La rainure 12 s'entend d'une zone d'interruption localisée des ondulations de la structure d'échange 8 sur une hauteur, une largeur et une longueur prédéterminée, de manière à former dans le passage 3 une zone localement dépourvue de surfaces d'échange secondaires, pour y introduire la sonde 14 perpendiculairement à la direction d'étendue longitudinale des ailettes. Un exemple de rainure 12 est montré sur la figure 4.

L'invention permet de réaliser une mesure directe de la température d'un fluide s'écoulant dans le passage 3, puisque la rainure 12 traverse des sommets d'onde 121. Une sonde de température agencée au fond de la rainure se trouve ainsi directement au contact du fluide s'écoulant entre les jambes d'ondes dans le passage 3, sous les sommets d'onde 121, ce qui permet de réaliser des mesures précises. Il est possible de réaliser des mesures de températures localement en choisissant les dimensions et le positionnement de la rainure dans la structure d'échange.

Le fait d'insérer la sonde 14 perpendiculairement à la direction d'écoulement du fluide dans le passage 3, permet de minimiser la longueur de la sonde introduite dans le passage et de faciliter la fabrication de la rainure au travers de la structure d'échange.

Selon une possibilité, la rainure 12 peut être ménagée au sein de la structure d'échange 8 en effectuant une perforation à travers la structure. La perforation peut être réalisée par usinage, électroérosion ou découpage, en particulier par découpage au plasma, au laser ou au jet d'eau. De préférence, la perforation est réalisée par électroérosion. En effet, cette technique est plus simple à mettre en œuvre que le découpage plasma qui nécessite des outillages plus lourds et couteux. En outre, on évite tout risque d'apparition de phénomènes d'oxydation ou de corrosion sur les bords de coupe qui peuvent être incompatibles avec le brasage de l'échangeur. L'électroérosion offre également une grande précision d'usinage, environ 5/100 de mm, ce qui adapté en particulier aux structures d'échange de faibles épaisseurs, typiquement entre 0,2 et 0,5 mm.

Dans le cas où la structure 8 est formée d'un ou plusieurs tapis d'onde 8a, 8b agencés consécutivement dans le passage 3 le long de la direction longitudinale z, la rainure 12 résulte d'une perforation réalisée au sein d'au moins un tapis d'onde.

De préférence, la sonde de température 14 est insérée dans la rainure 12 après la phase de brasage de l'échangeur.

De façon alternative ou complémentaire, la structure d'échange 8 peut aussi être formée de plusieurs tapis d'onde 8a, 8b agencés consécutivement dans le passage 3 le long de la direction longitudinale z et la rainure 12 peut résulter d'un jeu formé entre deux tapis d'onde 8a, 8b adjacents. La largeur d de la rainure 12 mesurée parallèlement à la direction longitudinale z, correspond alors à la largeur de ce jeu. De préférence, le jeu est créé lors de l'empilement des plaques et du positionnement des structures d'échange. La sonde de température est introduite dans le jeu après la phase de brasage de l'échangeur.

Avantageusement, au moins une pièce de maintien peut être agencée dans la rainure 12 afin d'assurer le positionnement de la sonde 14 dans la rainure. La pièce de maintien comprenant un orifice pour le passage de la sonde de température 14 et est conformée de façon à s'insérer dans la rainure 12, sa forme extérieure formant le complémentaire de la forme intérieure de la rainure.

De préférence, la rainure 12 présente une section transversale de forme carrée ou rectangulaire. On pourra envisager d'autres formes de sections transversales, selon la forme de la sonde 14 à loger, notamment semi-circulaire.

Dans le cadre de la présente invention, la sonde de température 14 peut être toute sonde configurée pour réaliser des mesures de température par contact. De préférence, la sonde de température 14 peut être une sonde de température par résistance, par exemple une sonde à résistance, notamment à résistance de platine du type PT100, ou bien une sonde de température à thermocouple ou à thermistance. Ce type de sonde présente une simplicité de mise en œuvre et une grande robustesse, et les mesures qu'ils fournissent sont peu sensibles aux contraintes mécaniques, en particulier traction et compression, ce qui n'est pas le cas des capteurs à fibre optique notamment. Leur utilisation est donc particulièrement avantageuse pour réaliser des mesures dans les passages d'un échangeur à plaques brasé.

Notons que la sonde 14 introduite dans la rainure 12 s'entend d'au moins la partie thermosensible d'un système de capteur, notamment le circuit résistif dans le cas d'une mesure par résistance ou la jonction de mesure entre les deux fils conducteurs d'un thermocouple, jonction également dénommée soudure chaude. Les autres éléments du capteur nécessaires à la prise de mesure, notamment un dispositif d'alimentation électrique, un dispositif de mesure de tension électrique sont agencés à l'extérieur de l'empilement et reliés à la sonde 14 par des fils conducteurs appropriés, tels des fils de cuivre, de thermocouple ou des câbles de prolongation). Dans le cas d'une sonde de température 14 à thermocouple, la sonde 14 peut comprendre deux fils conducteurs électriques soudés à une extrémité pour former la jonction de mesure, les fils étant agencés dans la rainure 12 nus ou dans une gaine protectrice, de forme généralement cylindrique.

De préférence, la sonde est configurée de façon à être directement mise en contact avec le fluide lorsque celui-ci circule dans un passage. En d'autres termes, aucun élément ou paroi intermédiaire n'est agencée autour de la partie thermosensible, en particulier aucune gaine étanche vissée depuis l'extérieur comme ce peut être le cas dans l'art antérieur. Ainsi, on réduit grandement la dimension de la sonde qui interfère avec la circulation du fluide et on améliore la réactivité de la partie thermosensible grâce au contact direct entre la partie thermosensible et le fluide.

Comme visible sur l'exemple de la figure 4, la rainure 12 présente une hauteur prédéterminée h qui est de préférence égale à au moins 25% de la hauteur totale H et/ou au plus 75%, de la hauteur totale H, de préférence entre 25% et 75%. Cela permet de positionner la sonde sur la hauteur du passage en évitant qu'elle ne touche les plaques car on souhaite mesurer directement la température du fluide. Eventuellement la hauteur prédéterminée h de la rainure 12 peut être égale à la hauteur totale H de la structure d'échange thermique 8, ce qui est le cas notamment lorsque la rainure 12 est définie par un jeu formé entre deux tapis d'onde consécutifs.

La rainure 12 peut présenter une largeur d, mesurée parallèlement à la direction longitudinale z, comprise entre 0,6 et 5 mm, de préférence entre 1 et 4 mm.

De préférence, on définit la largeur de la sonde de sorte à ce que la perturbation sur le fluide soit la plus faible possible, tout en offrant un espace suffisant pour accueillir la sonde. De préférence, la sonde agencées dans la rainure 12 est de forme générale cylindrique avec un diamètre qui peut être compris entre 0,5 mm et 4 mm, de préférence encore entre 1 et 3 mm. La largeur d de la rainure peut être définie de sorte à être de 0,1 à 1 mm supérieur au diamètre de la sonde. Par exemple, dans le cas d'une sonde température à thermocouple mesurant 0,5 mm de diamètre, la rainure 12 peut présenter une largeur de 0,6 mm.

La hauteur et la largeur de la rainure 12 sont déterminées de façon à pouvoir loger la sonde 14 et effectuer une mesure directe au sein de l'écoulement de fluide, tout en induisant une perturbation peu significative dans l'écoulement, du fait d'un effet minime sur la section de passage du fluide.

Selon une possibilité, dont un exemple est illustré sur la figure 2, la rainure 12 s'étend depuis un bord de la structure 8 agencé parallèlement à la direction longitudinale z pour se terminer au sein de la structure 8. La structure 8 présente une longueur totale L, mesurée suivant la direction latérale x, et la rainure 12 s'étend, suivant la direction latérale x, sur une longueur prédéterminée 1 qui est de préférence comprise entre 25 et 75% de la longueur totale L. Cette configuration répond notamment à un besoin de mesure de température dans une région proche du bord du passage 3, afin de pouvoir mesurer la température du fluide jusqu'au milieu du passage, là où les interférences hydrauliques et thermiques avec les barres massives et conductrices sont réduites. De préférence, la longueur 1 est comprise entre 300 et 900 mm.

Selon une autre possibilité (non illustrée), au moins une rainure 12 peut traverser de part en part la structure d'échange 8, c'est-à-dire que sa longueur 1 est égale à la longueur totale L de la structure 8. C'est le cas notamment lorsque la rainure 12 est définie par un jeu formé entre deux tapis d'onde consécutifs. Comme la rainure 12 traverse toute la largeur du passage 3, il est possible de réaliser des mesures à différentes positions dans la largeur du passage, en fonction de la position de la partie thermosensible de la sonde 14 dans la rainure 12, ce qui permet notamment de mettre en évidence d'éventuelles inhomogénéités de distribution du fluide dans la largeur du passage. On peut également prévoir plusieurs points de mesures en positionnant plusieurs parties thermosensibles le long de la rainure 12.

De préférence, le au moins un passage 3 est délimité entre deux barres de fermeture 6a s'étendant parallèlement à la direction longitudinale z et comprenant chacune au moins un évidement 5 agencé dans le prolongement de la rainure 12. L'évidement 5 communique d'une part avec la rainure 12 et d'autre part avec l'extérieur de l'empilement.

Avoir une rainure 12 traversante autorise aussi un procédé d'insertion de la sonde dans lequel un capillaire est introduit dans la rainure 12 par une extrémité de la rainure 12, de préférence dans l'orifice d'une pièce de maintien telle que décrite ci-dessus, puis la sonde est introduite dans le capillaire afin d'être guidée jusqu'à sa position finale, enfin le capillaire est retiré par une extrémité opposée de la rainure 12, laissant la sonde 14 en position dans la rainure 12.

En référence à la figure 3, le passage 3 délimité entre deux barres de fermeture 6a opposées comprend une structure d'échange comprenant au moins une paire de rainures 12 qui s'étendent depuis chaque barre de fermeture 6a en regard l'une de l'autre.

Agencer des sondes de part et d'autre du passage 3 permet de vérifier si le fluide est bien distribué de façon homogène sur la largeur du passage. Comme l'échange thermique dans le passage est lié au débit de fluide à proximité des sondes, la comparaison des températures mesurées de part et d'autre du passage permet d'établir si le débit de fluide est différent. Par ailleurs les sondes permettent de suivre les régimes transitoires de température dans le temps et d'apprécier les éventuels chocs thermiques subis par l'échangeur.

Avantageusement, la structure d'échange 8 comprend une pluralité de rainures 12 positionnées le long de la direction longitudinale z à des intervalles prédéterminés. Cela permet de mesurer localement la température du fluide, et donc son évolution, à différentes positions dans la longueur de l'échangeur, au fur et à mesure qu'il échange de la chaleur avec un autre fluide circulant dans un passage adjacent. On obtient ainsi des informations sur les phénomènes physiques qui peuvent avoir lieu au sein de l'échangeur, notamment les changements de phase, les réactions chimiques, et sur leur localisation dans l'échangeur.

En particulier, la structure 8 peut comprendre plusieurs paires de rainures 12 qui s'étendent en vis-à-vis depuis des barres de fermeture 6a opposées, i. e. depuis des bords opposés du passage 3. Dit autrement, les rainures 12 opposées occupent les mêmes positions zi le long des barres de fermeture.

En fait, tout ou partie des barres de fermetures 6a d'un ou plusieurs passages 3 de l'échangeur peut comprendre une pluralité de rainures 12 positionnées le long de la direction longitudinale z à des intervalles prédéterminés. Un intervalle est défini comme la distance séparant deux rainures 12 s'étendant à partir d'une même barre. L'arrangement de plusieurs rainures permet de mesurer des températures à différentes positions dans la longueur et/ou la largeur de l'échangeur, notamment pour déterminer où ont lieu différentes réactions ou changement de phase. On obtient ainsi une cartographie des phénomènes physico-chimiques qui peuvent se produire dans l'échangeur. L'agencement de rainures avec sondes sur différents passages permet également un comparatif entre les distributions de température sur des passages situés à des hauteurs différentes dans l'empilement de l'échangeur.

Les intervalles prédéterminés peuvent varier le long d'au moins une partie de la structure d'échange 8, afin de pouvoir mesurer des températures de fluide localement aux endroits souhaités. De préférence, les intervalles entre les rainures 12 augmentent suivant la direction longitudinale z, le long de tout ou partie de structure 8. Notons que l'augmentation peut être une augmentation progressive, d'une rainure à une autre, ou une augmentation par palier, c'est-à-dire que l'intervalle entre plusieurs rainures successifes peuvent être constant sur au moins une portion de structure, puis augmenter sur la portion suivante.

En effet, il peut être utile de cartographier plus finement les températures du fluide en partie basse du passage, au niveau ou à proximité de son point d'introduction, car il peut se produire des phénomènes d'inhomogénéité dans la distribution du fluide, notamment des inhomogénéités en termes de débit ou de répartition entre deux phases dans le cas d'un fluide à l'état diphasique liquide/gaz par exemple. Ces phénomènes de mal distribution se traduisent par des variations locales de température. En particulier, dans le cas d'un fluide diphasique, la phase liquide présente une capacité frigorifique bien supérieure à celle de la phase gazeuse, si bien qu'une variation du ratio volumique liquide/gaz se traduit par une variation de la température du fluide qu'il est intéressant de pouvoir mesurer.

Selon un mode de réalisation, la structure 8 est divisée, suivant la direction longitudinale z, en au moins deux portions 8a, 8b, celle 8b des deux portions qui est située en aval de l'autre ayant des intervalles entre les rainures 12 supérieurs aux intervalles de l'autre 8a des deux portions. Notons que le terme « aval » s'entend en référence au sens d'écoulement du fluide dans le passage considéré.

Ainsi, la figure 3 illustre un exemple dans lequel les intervalles entre les rainures 12 augmentent en suivant la direction longitudinale z. L'augmentation a lieu entre des portions successives 8a, 8b, 8c, qui peuvent être formées par des tapis d'ondes successifs 8a, 8b, 8c. Les intervalles sont constants sur chaque portion.

Selon un mode de réalisation, dont un exemple est illustré sur la figure 4, la structure d'échange 8 est une onde à décalage partiel, également appelée onde « serrated » en anglais. Ce type d'onde comprend plusieurs ondulations 81, 82 comprenant chacune une série de sommets d'onde 121 et de bases d'onde 122 reliés alternativement par une succession d'ailettes 123. Les ondulations 81, 82 sont agencés consécutivement suivant la direction z avec au moins une partie desdites ondulations présentant un décalage prédéterminé suivant la direction latérale x par rapport à une autre ondulation adjacente. Les ondulations 81, 82 présentent des directions d'ondulation parallèles les unes aux autres.

Avantageusement, au moins une rainure 12 est ménagée au sein d'une des ondulations de l'onde à décalage partielle. Chaque ondulation 81, 82 présente une longueur dite de serration Ls mesurée suivant la direction longitudinale z. De préférence, la largeur d de la rainure 12 est comprise entre 15 et 90%, de préférence entre 20 et 50% de la longueur de serration Ls. Cela permet de conserver la rigidité et la tenue mécanique de la structure d'échange 8. Et il est nécessaire que la largeur d soit inférieur à la longueur de serration afin que les ondulations restent solidaires. De préférence, la largeur d est comprise entre 0,6 et 5 mm, de préférence entre 1 et 4 mm.

La figure 5 illustre un mode de réalisation dans lequel la sonde de température 14 fait saillie à l'extérieur de l'empilement par l'évidement 5 d'une barre de fermeture 6a puis par un raccord 15 fixé sur la barre de fermeture 6a dans le prolongement de l'évidement 5. Le raccord 15 est configuré pour assurer une étanchéité fluidique entre l'évidement 5 et l'extérieur de l'empilement. De préférence, la raccord 15 est fixé par soudage sur la barre 6a.

Comme on le voit sur la figure 5, la rainure 12 s'étend entre une première extrémité 12a par laquelle la sonde de température 14 est introduite lors de son montage dans le passage 3 et une deuxième extrémité 12b agencée au sein du passage 3 et recevant l'extrémité de la sonde 14 au niveau de laquelle se situe la partie thermosensible 14a. Avantageusement, la rainure 12 présentant, au niveau de l'une et/ou l'autres desdites première et deuxième extrémités 12a, 12b, une augmentation de sa largeur et/ou de sa hauteur de façon à former une première cavité et/ou une deuxième cavité auxdites première et/ou deuxième extrémités 12a, 12b.

La cavité située du côté de la barre de fermeture 6a permet de faciliter l'introduction de la sonde 14 et de limiter le risque de l'endommager lors de cette introduction. La cavité située plus loin au sein du passage 3 permet d'éviter tout risque que la partie thermosensible de la sonde 14 ne soit en contact avec la structure d'échange 8. On s'assure ainsi d'un contact uniquement avec le fluide circulant dans le passage 3, ce qui garantit la précision de la mesure de température. De préférence, on prévoit une cavité à chaque extrémité de la rainure 12. Il est à noter que cette configuration de rainure ne se limite pas seulement au mode de réalisation de la figure 5 et qu'elle est applicable à tout type d'agencement de rainures selon l'invention.

De préférence, la ou les cavités résultent d'une augmentation de 30 à 100% de la hauteur h et/ou de la largeur d de la rainure 12. De préférence, on prévoit un élargissement de la rainure 12 à la fois sur sa hauteur et sur sa largeur.

Bien entendu, l'invention n'est pas limitée aux exemples particuliers décrits et illustrés dans la présente demande. D'autres variantes ou modes de réalisation à la portée de l'homme du métier peuvent aussi être envisagés sans sortir du cadre de l'invention définie par les revendications ci-après. On notera notamment que plusieurs passages de l'échangeur, prévus pour l'écoulement de fluides différents ou non, peuvent présenter au moins une rainure selon l'invention, ces passages pouvant présenter des configurations différentes, en particulier un nombre de rainures, des formes et/ou une répartition le long des passages différents.

## Revendications

1. Echangeur de chaleur du type à plaques et ailettes brasées comprenant un empilement de plaques (2) agencées parallèlement entre elles et à une direction longitudinale (z) de façon à définir entre lesdites plaques (2) une pluralité de passages (3) adaptés pour l'écoulement d'au moins un premier fluide suivant la direction longitudinale (z), au moins une structure d'échange (8) de forme ondulée étant agencée entre deux plaques (2) successives et comprenant des sommets d'onde (121) et des bases d'onde (122) reliés alternativement par une succession d'ailettes (123), lesdites ailettes (123) se succédant suivant une direction latérale (x) qui est orthogonale à la direction longitudinale (z) et qui définit une direction d'ondulation de la structure d'échange (8), et les sommets et bases d'ondes (121, 122) étant disposés contre les plaques (2) et présentant une épaisseur (e) mesurée parallèlement à une direction d'empilement (y) qui est perpendiculaire à la direction longitudinale (z) et à la direction latérale (x), la structure d'échange (8) ayant une hauteur totale (H) mesurée parallèlement à une direction d'empilement (y), **caractérisé en ce qu'**au moins une rainure (12) est ménagée à travers la structure d'échange (8) dans une direction perpendiculaire à la direction longitudinale (z), une sonde de température (14) étant agencée dans la rainure (12), ladite rainure (12) étant ménagée depuis des sommets d'onde (121) sur une hauteur prédéterminée (h) mesurée suivant la direction d'empilement (y) qui est supérieure à l'épaisseur (e) des sommets d'onde (121).

2. Echangeur selon la revendication 1, **caractérisé en ce que** la sonde de température (14) est choisie parmi une sonde à résistance, notamment à résistance de platine, une sonde de température à thermocouple, une sonde de température à thermistance.

3. Echangeur selon l'une des revendications 1 ou 2, **caractérisé en ce que** la sonde de température (14) est configurée de sorte à être en contact direct avec ledit au moins un premier fluide lorsqu'il s'écoule entre les deux plaques (2) successives.

4. Echangeur selon l'une des revendications précédentes, **caractérisé en ce que** la structure d'échange (8) présente une hauteur totale (H) mesurée parallèlement à une direction d'empilement (y), la hauteur prédéterminée (h) de la rainure (12) étant égale à au moins 25% de la hauteur totale (H) et/ou au plus 75% de la hauteur totale (H), de préférence entre 25 et 75% de la hauteur totale (H).

5. Echangeur selon l'une des revendications précédentes, **caractérisé en ce que** la rainure (12) présente une largeur (d) mesurée parallèlement à la direction longitudinale (z), comprise entre 0,6 et 5 mm, de préférence entre 1 et 4 mm.

6. Echangeur selon l'une des revendications précédentes, **caractérisé en ce que** la structure d'échange (8) présente une longueur totale (L) mesurée suivant la direction latérale (x) et comprend au moins une rainure (12) s'étendant, suivant la direction latérale (x), sur une longueur prédéterminée (1) comprise entre 25 et 75% de la longueur totale (L) de la structure d'échange (8).

7. Echangeur selon l'une des revendications précédentes, **caractérisé en ce qu'**il comprend au moins une rainure (12) résultant d'une perforation de la structure d'échange (8) réalisée par usinage, électroérosion ou découpage, en particulier par découpage au plasma, au laser ou au jet d'eau.

8. Echangeur selon l'une des revendications précédentes, **caractérisé en ce que** la structure d'échange (8) comprend plusieurs tapis d'onde (8a, 8b) juxtaposés le long de la direction longitudinale (z), au moins une rainure (12) étant définie par un jeu formé entre deux tapis d'onde (8a, 8b) adjacents.

9. Echangeur selon l'une des revendications précédentes, **caractérisé en ce que** la structure d'échange (8) est du type onde à décalage partiel comprenant plusieurs ondulations comprenant chacune une série de sommets d'onde (121) et de bases d'onde (122) reliés alternativement par une succession d'ailettes (123), au moins une partie desdites ondulations présentant un décalage prédéterminé suivant la direction latérale (x) par rapport à une autre ondulation adjacente, lesdites ondulations ayant des longueurs dites de serration (Ls) mesurées suivant la direction longitudinale (z), la largeur (d) de la rainure (12), mesurée parallèlement à la direction longitudinale étant comprise entre 15 et 90%, de préférence entre 20 et 50% de la longueur de serration (Ls).

10. Echangeur selon l'une des revendications précédentes, **caractérisé en ce que** les passages (3) sont délimités par des barres de fermetures (6a, 6b) disposées entre les plaques (2), au moins une barre de fermeture (6a) s'étendant parallèlement à la direction longitudinale (z) et comprenant au moins un évidement (5), ledit évidement (5) communiquant d'une part avec la rainure (12) et d'autre part avec l'extérieur de l'empilement.

11. Echangeur selon la revendication 10, **caractérisé en ce que** la sonde de température (14) fait saillie à l'extérieur de l'empilement par l'évidement (5) puis par un raccord (15) fixé, de préférence soudé, sur la barre de fermeture (6a) dans le prolongement de l'évidement (5), le raccord (15) étant configuré pour assurer une étanchéité fluidique entre l'évidement (5) et l'extérieur de l'empilement.

12. Echangeur selon l'une des revendications précédentes, **caractérisé en ce que** la rainure (12) s'étend entre une première extrémité (12a) configurée pour l'insertion de la sonde de température (14) et une deuxième extrémité (12b) agencée au sein du passage (3) et recevant l'extrémité de la sonde (14), la rainure (12) présentant, au niveau de l'une et/ou l'autres desdites première et deuxième extrémités (12a, 12b), une augmentation de sa largeur et/ou de sa hauteur de façon à former une première cavité et/ou une deuxième cavité auxdites première et/ou deuxième extrémités (12a, 12b).

13. Echangeur selon l'une des revendications précédentes, **caractérisé en ce que** ledit au moins un passage (3) est délimité entre deux barres de fermeture (6a) opposées s'étendant parallèlement à la direction longitudinale (z), la structure d'échange comprenant au moins une paire de rainures (12) qui s'étendent depuis chaque barre de fermeture (6a) en regard l'une de l'autre, éventuellement les rainures de la paire (12) se rejoignent de façon à former une même rainure (12) traversant tout le passage (3).

14. Echangeur selon l'une des revendications précédentes, **caractérisé en ce que** la structure d'échange (8) comprend une pluralité de rainures (12) positionnées le long de la direction longitudinale (z) à des intervalles prédéterminés.

15. Echangeur selon la revendication 14, **caractérisé en ce que** les intervalles prédéterminés varient le long d'au moins une partie de la structure d'échange (8), de préférence les intervalles augmentent suivant la direction longitudinale (z).

16. Echangeur selon l'une des revendications 14 ou 15, **caractérisé en ce que** la structure d'échange (8) est divisée, suivant la direction longitudinale (z), en au moins deux portions (8a, 8b), celle (8b) des deux portions située en aval de l'autre ayant des intervalles entre les rainures (12) supérieurs aux intervalles de l'autre (8a) des deux portions.
